# EUROPÄISCHE PATENTANMELDUNG

(11) **EP 1 251 337 A2**
(43) Veröffentlichungstag der Anmeldung: **23.10.2002**
(21) Anmeldenummer: 02100376.9
(22) Anmeldetag: 16.04.2002
(51) Int. Cl.: G01D 5/16

(54) **Anordnung zum Bestimmen der Bewegungsrichtung eines Bewegungsgeberelements**

(30) Priorität: 17.04.2001 DE 10118806
(71) Anmelder: Philips Corporate Intellectual Property GmbH, 20099 Hamburg (DE); Koninklijke Philips Electronics N.V., 5621 BA Eindhoven (NL)
(72) Erfinder: Butzmann, Stefan, 52066, Aachen (DE)
(74) Vertreter: Volmer, Georg, Dipl.-Ing.

(57) **Zusammenfassung**

Beschrieben wird eine Anordnung zum Bestimmen der Bewegungsrichtung eines Bewegungsgeberelements, welches in einer sich entlang einer Bewegungskoordinate, die eine Bewegung des Bewegungsgeberelements beschreibt, streifenförmig erstreckenden ersten Zone angeordnete, mit einer ersten Teilung periodisch wiederkehrende Bereiche wechselnder Beeinflussung eines ersten Magnetfeldes und in einer sich entlang der Bewegungskoordinate streifenförmig erstreckenden zweiten Zone angeordnete, mit einer zweiten Teilung periodisch wiederkehrende Bereiche wechselnder Beeinflussung eines zweiten Magnetfeldes aufweist, mit einem ersten Sensorelement zum Detektieren der Beeinflussung des ersten Magnetfeldes durch die erste Zone des Bewegungsgeberelements und mit einem zweiten Sensorelement zum Detektieren der Beeinflussung des zweiten Magnetfeldes durch die zweite Zone des Bewegungsgeberelements, worin die erste Teilung der ersten Zone in einem ungeraden, ganzzahligen Verhältnis zur zweiten Teilung der zweiten Zone steht. Als ein solches ungerades, ganzzahliges Verhältnis ist ein Verhältnis von 1:3, 1:5, usw., anzusehen.

Die erfindungsgemäße Anordnung ist einfach aufgebaut. Insbesondere werden lediglich zwei Sensorelemente benötigt. Dadurch kann die erfindungsgemäße Anordnung sehr preiswert und störsicher gestaltet werden.

## Beschreibung

Anordnung zum Bestimmen der Bewgungsrichtung eines Bewegungsgeberelements

Die Erfindung bezieht sich auf eine Anordnung zum Bestimmen der Bewegungsrichtung eines Bewegungsgeberelements

Es sind Anordnungsn zur Messung der Drehgeschwindigkeit eines rotierenden Bewegungsgeberelements mit einem Sensorelement beschrieben worden, welches den magnetoresistiven Effekt ausnutzt. Darin umfaßt dieses magnetoresistive Sensorelement vier Permalloy-Streifen, die in Mäanderform auf einem Siliziumsubstrat angeordnet und in Wheatstonescher Brückenanordnung verschaltet sind Das magnetoresistive Sensorelement ist entlang einer Meßrichtung gegenüber der Polarität und der Feldstärke eines äußeren Magnetfeldes empfindlich und zum Abgeben eines Meßsignals in Abhängigkeit von einer in der Meßrichtung gemessenen, als Meßfeld bezeichneten Feldkomponente des Magnetfeldes ausgebildet.

Da durch den magnetoresistiven Effekt unmittelbar eine Drehbewegung des Bewegungs-Geberelements nicht direkt gemessen werden kann, ist am magnetoresistiven Sensorelement zusätzlich ein als Arbeitsmagnet bezeichneter Permanentmagnet montiert. Dieser Arbeitsmagnet ist auf die Rückseite des magnetoresistiven Sensorelements bzw. seines Gehäuses geklebt, so dass das magnetoresistive Sensorelement vom Magnetfeld des Arbeitsmagneten durchsetzt wird, allerdings in dieser Zusammenstellung für sich genommen ohne das Bewegungsgeberelement noch keine Feldkomponente des Magnetfeldes in der Meßrichtung auftritt. Das vom magnetoresistiven Sensorelement abgsgsbene Meßsignal ist in dieser Konfiguration gleich Null.

Wird ein mit zahnradartig ausgeformtem, ferromagnetischem Material ausgebildetes Bewegungsgeberelement in der Nähe des Sensors angeordnet, führt dies zu einer Veränderung des Feldverlaufs des Magnetfelds des Arbeitsmagneten. Dazu ist das magnetoresistive Sensorelement gegenüber den Zähnen des mit zahnradartig ausgeformtem, ferromagnetischem Material ausgebildeten Bewegungsgeberelements mit seiner Meßrichtung in der Bewegungsrichtung des Bewegungsgeberelements ausgerichtet. Die Zähne des Bewegungsgeberelements bewegen sich somit in dieser Meßrichtung am Sensorelement vorbei. Dies führt entlang der mit der Meßrichtung zusammenfallenden Bewegungskoordinate des Bewegungsgeberelements zu einer mit dem Abstand der Zähne der zahnradartigen Ausformungen des Bewegungsgeberelements periodisch auftretenden Verformung der Feldlinien des Magnetfelds des Arbeitsmagneten in der Meßrichtung des Sensorelements. An einer "symmetrischen" Position, in der sich das Sensorelement mittig vor einem Zahn oder einer Lücke zwischen zwei Zähnen befindet, wird dabei das Magnetfeld nicht in der BewegungsRichtung des Bewegungsgeberelements verformt; somit ist in dieser Position das Ausgangssignal des Sensorelements gleich Null. An einer "nicht symmetrischen" Position, in der das Sensorelement sich weder mittig vor einem Zahn noch vor einer Lücke befindet, ergibt sich eine Feldverformung des Magnetfelds in der Bewegungsrichtung des Bewegungsgeberelements, die von der Bewegungskoordinate des Bewegungsgeberelements abhängt. Damit wird durch das Sensorelement ein von dieser Bewegungskoordinate des Bewegungsgeberelements abhängiges Ausgangssignal erzeugt, welches vorzugsweise wenigstens nahezu sinusförmig über der Bewegungskoordinate sein kann.

Wahlweise ist auch ein magnetisiertes Bewegungsgeberelement beschrieben worden, entlang dessen Bewegungsrichtung magnetische Nord- und Südpole abwechselnder Polarität angeordnet sind. In dieser Ausbildung stellt das Bewegungsgeberelement selbst das Magnetfeld und damit auch das Meßfeld bereit.

Derartige magnetoresistive Sensorelemente werden mit rotierenden Bewegungsgeberelementen in vielfältigen Systemen zur Erfassung der Drehzahl von mit den Bewegungsgeberelementen gekoppelten Rädern, Wellen oder dergleichen eingesetzt. Zu den häutigsten Anwendungen gehört der Einsatz in Antiblockiersystemen oder als Kurbelwellendrehzahlsensor für Kraftfahrzeuge. Üblicherweise wird hierbei der Sensor vor einem Zahnrad aus magnetisierbarem Werkstoff mit vier zu einer Wheatstonebrücke der eingangs genannten. Art verbundenen Widerständen betrieben, wobei die Meßrichtung, d.h. die magnetisch empfindliche Richtung des Sensorelements in beschriebener Weise parallel zur Drehrichtung koordinate des Zahnrads liegt.

Wie beschrieben kann hierbei das Ausgangssignal, der Wheatstonebrücke in erster Näherung durch ein über der Bewegungskoordinate des Bewegungsgeberelements sinusförmiges Signal dargestellt werden, wobei die Nulldurchgänge im Ausgangssignals jevwils vor der Mitte eines Zahns bzw. vor der Mitte einer Lücke zwischen je zwei Zähnen des Bewegungsgeberelements erfolgen. Bei bewegtem Bewegungsgeberelement kann aus dem Ausgangssignal die Stellung des Bewegungsgeberelements gegenüber dem Sensorelement eindeutig bestimmt werden.

Nachteilig bei der vorstehend beschriebenen Anordnung ist die Tatsache, dass eine eindeutigs Bestimmung der Bewegungsrichtung des Bewegungsgeberelements nicht möglich ist.

In vielen Anwendungen, wie z.B. bei der Erfassung der Nockenwellendrehzahl oder beim Betrieb von Kurbelwellenstartergeneratoren, ist jedoch eine eindeutige Bestimmung der Bewegungsrichtung des Bewegungsgeberelements unmittelbar bei der Inbetriebnahme erwünscht.

Die Erfindung hat die Aufgabe, eine Anordnung zum Bestimmen der Bewegungsrichtung eines Bewegungsgeberelements zu schaffen.

Erfindungsgemäß wird diese Aufgabe gelöst durch eine Anordnung zum Bestimmen der Bewegungsrichtung eines Bewegungsgsberelements, welches in einer sich entlang einer Bewegungskoordinate, die eine Bewegung des Bewegungsgeberelements beschreibt, streifenförmig erstreckenden ersten Zone angeordnete, mit einer ersten Teilung periodisch wiederkehrende Bereiche wechselnder Beeinflussung eines ersten Magnetfeldes und in einer sich entlang der Bewegungskoordinate streifenförmig erstreckenden zweiten Zone angeordnete, mit einer zweiten Teilung periodisch wiederkehrende Bereiche wechselnder Beeinflussung eines zweiten Magnetfeldes aufweist, mit einem eisten Sensorelement zum Detektieren der Beeinflussung des ersten Magnetfeldes durch die erste Zone des Bewegungsgeberelements und mit einem zweiten Sensorelement zum Detektieren der Beeinflussung des zweiten Magnetfeldes durch die zweite Zone des Bewegungsgeberelements, worin die erste Teilung der eisten Zone in einem ungeraden, ganzzahligen Verhältnis zur zweiten Teilung der zweiten Zone steht. Als ein solches ungerades, ganzzahliges Verhältnis ist ein Verhältnis von 1:3, 1:5, usw., anzusehen.

Die erfindungsgemäße Anordnung ist einfach aufgebaut. Insbesondere werden lediglich zwei Sensorelemente benötigt. Dadurch kann die erfindungsgemäße Anordnung sehr preiswert und störsicher gestaltet werden.

Vorzugsweise ist die erste Zone im wesentlichen in einer sich entlang der Bewegungskoordinate des Bewegungsgeberelements erstreckenden ersten Hauptfläche des Bewegungsgeberelements und die zweite Zone im wesentlichen in einer sich entlang der Bewegungskoordinate des Bewegungsgeberelements erstreckenden zweiten Hauptfläche des Bewegungsgeberelements angeordnet. Diese Hauptflächen können in einer gemeinsamen Fläche, beispielsweise in einer Ebene, aber auch voneinander getrennt liegen. Dadurch ergibt sich eine große Variationsmöglichkeit bei der konstruktiven Ausgestaltung der erfindungsgemäßen Anordnung.

In einer vorteilhaften Weiterbildung der Erfindung ist das erste Sensorelement gegenüber oder neben einem bezüglich der Bewegungsrichtung seitlichen Randbereich der ersten Zone periodisch wiederkehrender Bereiche wechselnder Beeinflussung des ersten Magnetfeldes des Bewegungsgeberelements angeordnet ist. In einer anderen Weiterbildung der Erfindung weist die erste Zone zwei parallel zueinander entlang der Bewegungskoordinate des Bewegungsgebeielerrents sich erstreckende Teilzonen mit der gleichen, eisten Teilung periodisch wiederkehrender Bereiche wechselnder Beeinflussung des Magnetfeldes auf, die um wenigstens nahezu eine halbe Periode der ersten Teilung in Richtung der Bewegungskoordinate des Bewegungsgeberelements versetzt angeordnet sind

Dabei sind vorzugsweise die Zonen bzw. Teilzonen periodisch wiederkehrender Bereiche wechselnder Beeinflussung des Magnetfeldes durch abwechselnd im wesentlichen senkrecht zur zugeordneten Hauptfläche des Bewegungsgeberelements vor- und rückspringende Ausformungen eines vom Bewegungsgeberelement umfaßten, magnetisierbaren Werkstoffs gebildet. Insbesondere ist das Bewegungsgeberelement mit zahnradartig ausgeformtem, ferromagnetischem Material ausgebildet. Entlang der Bewegungskoordinate des Bewegungsgeberelements erstreckt sich somit eine Zahn-Lücke-Konfiguration, in der die Zähne das Magnetfeld in anderer Weise beeinflussen als die Lücken. Das Bewegungsgeberelement weist dazu in einem Beispiel der einfachsten Ausbildung in der ersten Zone periodisch wiederkehrender Bereiche wechselnder Beeinflussung des Magnetfeldes im wesentlichen die Form eines einfachen Zahnrades auf, wie sie für sich bereits beschrieben ist. In diesem Fall ist eine sehr einfache Realisierung der erfindungsgemäßen Anordnung möglich. In einem Beispiel für die weitere Fortbildung mit einer aus zwei Teilzonen periodisch wiederkehrender Bereiche wechselnder Beeinflussung des Magnetfeldes bestehenden ersten Zone kann das Bewegungsgeberelement in dieser ersten Zone zwei derartige Zahnräder umfassen, die axial aneinander gefügt und in Umfangsrichtung gegeneinander um wenigstens nahezu einen halben Abstand zweier benachbarter Zähne am Umfang verdreht angeordnet sind.

In dieser Ausgestaltung der Erfindung ist ferner vorteilhaft wenigstens ein Arbeitsmagnet zum Beaufschlagen der Anordnung mit dem ersten und dem zweiten Magnetfeld vorgesehen, wobei die hauptsächliche Richtung der magnetischen Feldlinien des vom Arbeitsmagneten ausgehenden Magnetfeldes bzw. der von den Arbeitsmagneten ausgehenden Magnetfelder wenigstens weitgehend rechtwinklig zur Bewegungskoordinate des Bewegungsgeberelements ausgerichtet ist.

In einer anderen Ausgestaltung der Erfindung sind die Zonen bzw. Teilzonen periodisch wiederkehrender Bereiche wechselnder Beeinflussung des Magnetfeldes durch sich abwechselnde, entgegengesetzte magnetische Pole eines vom Bewegungsgeberelement umfaßten, magnetisierten Werkstoffs gebildet sind.

Vorzugsweise wird für die vorgenannten Ausgestaltungen der Erfindung als erstes Sensorelement ein solches eingesetzt, das entlang einer Meßrichtung gegenüber wenigstens der Polarität des Magnetfeldes empfindlich und zum Abgeben eines Meßsignals in Abhängigkeit von einer in der Meßrichtung gemessenen, als erstes Meßfeld bezeichneten Feldkomponente des ersten Magnetfeldes ausgebildet ist und bei dem die Meßrichtung wenigstens nahezu rechtwinklig zur Bewegungskoordinate des Bewegungsgeberelements ausgerichtet ist.

Durch diese Anordnung ist es in einfacher Weise möglich, vom ersten Sensorelement ein Ausgangssignal zu gewinnen, welches eine eindeutige Zuordnung zur Position des ersten Sensorelements gegenüber dem Bewegungsgeberelement aufweist.

Bevorzugt ist wenigstens eines der Sensorelemente als Hall-Sensorelement oder als magnetoresistives Sensorelement ausgestaltet.

Gemäß einer weiteren Fortbildung der Erfindung kann das Bewegungsgeberelement linear ausgebildet sein. Es ist in dieser Form sehr vorteilhaft für lineare Bewegungsaufnehmer einsetzbar. In einer anderen bevorzugten Ausgestaltung ist das Bewegungsgeberelement drehsymmetrisch ausgebildet und für Drehbewegungsaufnehmer einsetzbar.

### Die Erfindung wird im Nachfolgenden anhand der Zeichnung näher erläutert. Darin zeigen

- Fig. 1: eine schematische Darstellung eines ersten Ausführungsbeispiels der Erfindung,
- Fig. 2: eine schematische Darstellung eines zweiten Ausführungsbeispiels der Erfindung,
- Fig. 3: ein Diagramm zur Darstellung der Funktionsweise der Anordnungen nach Fig. 1 und 2 sowie
- Fig. 4: ein Diagramm zur Darstellung der Funktionsweise eines zweiten Ausführungsbeispiels.

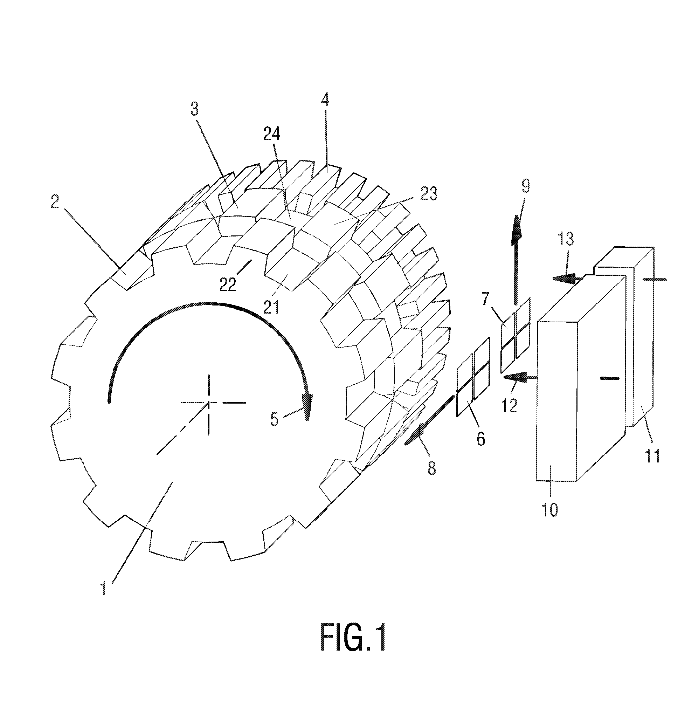

In Fig. 1 ist mit dem Bezugszeichen 1 ein Beispiel für ein drehsymmetrisch ausgebildetes Bewegungsgeberelement dargestellt, welches die Form eines mehrteiligen, aus magnetisierbarem Werkstoff gefertigten Zahnrades aufweist. Die einzelnen, mit den Bezugszeichen 2, 3 und 4 bezeichneten Teile dieses Zahnrades sind scheibenartig axial aneinandergereiht. Das erste dieser scheibenförmigen Teile mit dem Bezugszeichen 2 bildet eine erste Teilzone einer ersten Zone periodisch wiederkehrender Bereiche wechselnder Beeinflussung eines Magnetfeldes und weist eine erste Teilung auf, die durch abwechselnd im wesentlichen senkrecht zu einer durch die Mantelfläche des Zahnrades dargestellte Hauptfläche des Bewegungsgeberele- ments vor- und rückspringende Ausformungen, d.h. Zähne des Zahnrades, eines magneti- sierbaren Werkstoffs gebildet sind, aus dem wenigstens diese Zähne gefertigt sind.

Die erste Zone periodisch wiederkehrender Bereiche wechselnder Beeinflussung eines Magnetfeldes umfaßt bei dem zahnradförmigen Bewegungsgeberelement 1 gemäß Fig. 1 weiterhin eine zweite Teilzone, gebildet durch das scheibenartige Teil 3. Die Teile 2 und 3 des zahnradförmigen Bewegungsgeberelements 1 bilden somit zwei parallel zueinander entlang einer durch einen Pfeil 5 dargestellten Bewegungskoordinate des Bewegungsgeberelements 1 sich eistreckende Teilzonen mit der gleichen, eisten Teilung- hier der Zahnteilung des Zahnrades - periodisch wiederkehrender Bereiche wechselnder Beeinflussung des Magnetfeldes, die um wenigstens nahezu eine halbe Periode dieser eisten Teilung in Richtung der Bewegungskoordinate 5 des Bewegungsgeberelements 1 versetzt, d.h. hier in Umfangsrichtung des Zahnrades verdreht, angeordnet sind

Das scheibenförmige Teil 4 des Zahnrades, welches sich an das Teil 3 axial anschließt, bildet eine zweite Zone periodisch wiederkehrender Bereiche wechselnder Beeinflussung eines Magnetfeldes, die ebenfalls durch abwechselnd im wesentlichen senkrecht zu der ihr zugeordneten Hauptfläche des Bewegungsgeberelements 1 - hier ebenfalls der Mantelfläche des Zahnrades - vor- und rückspringende Ausformungen eines vom Bewegungsgeberelement 1 umfaßten, magnetisierbaren Werkstoffs geformt, d.h. durch Zähne mit einer zweiten Zahnteilung ausgestaltet ist.

Die erste Zahnteilung der aus den Teilen 2,3 des Zahnrades gebildeten ersten Zone des Bewegungsgeberelements 1 und die zweite Zahnteilung der durch das Teil 4 des Zahnrades gebildeten zweiten Zone des Bewegungsgeberelements 1 stehen zueinander in einem ungeraden, ganzzahligen Verhältnis welches im Ausführungsbeispiel der Fig. 1 den Wert 1:3 aufweist. Auf eine Zahn-Lücke-Abfolge des Zahnrades in der ersten Zone entfallen dabei in der zweiten Zone drei Zahn-Lücke-Abfolgen.

Gegenüber der aus den Teilen 2, 3 gabildeten ersten Zone des Bewegungsgeberelements 1 ist ein erstes Sensorelement 6 angeordnet. Ein zweites Sensorelement 7 ist gegenüber der durch das Teil 4 des Zahnrades gabildeten zweiten Zone des Bewegungsgeberelements 1 positioniert. Beide Sensorelemente 6, 7 sind entlang einer Meßrichtung gegenüber wenigstens der Polarität eines sie durchsetzenden Magnetfeldes empfindlich und zum Abgeben eines Meßsignals in Abhängigkeit von einer in der Meßrichtung gemessenen, als Meßfeld bezeichneten Feldkomponente des Magnetfeldes ausgebildet. Die durch einen Pfeil mit dem Bezugszeichen 8 gekennzeichnete Meßrichtung des eisten Sensorelements 6 ist dabei wenigstens nahezu rechtwinklig zur Bewegungskoordinate 5 des Bewegungsgeberelements 1, nämlich in axialer Richtung des Zahnrades, ausgerichtet, und das erste Sensorelement 6 ist vorzugsweise mittig vor den durch die Teile 2 und 3 des Zahnrades gebildeten Teilzonen der eisten Zone des Bewegungsgeberelements 1 ausgerichtet. Die durch einen Pfeil mit dem Bezugszeichen 9 gekennzeichnete Meßrichtung des zweiten Sensorelements 7 ist dabei wenigstens nahezu parallel zur Bewegungskoordinate 5 des Bewegungsgeberelements 1, nämlich in Umfangsrichtung des Zahnrades, ausgerichtet.

Hinter dem ersten Sensorelement 6 auf seiner vom Bewegungsgeberelement 1 abgewandten Seite ist in der Anordnung nach Fig. 1 ferner ein erster Arbeitsmagnet 10 angeordnet, der als Permanentmagnet ausgebildet ist und durch den die Anordnung aus Zahnrad 1 und erstem Sensorelement 6 mit einem Magnetfeld beaufschlagt wird, wobei die durch einen Pfeil mit dem Bezugszeichen 12 dargestellte hauptsächliche Richtung der magnetischen Feldlinien des vom ersten Arbeitsmagneten 10 ausgehenden Magnetfeldes im wesentlichen rechtwinklig sowohl zur Bewegungskoordinate des Zahnrades 1, d.h. zu dessen Bewegungsrichtung 5, als auch zur Meßrichtung 8 des ersten Sensorelements 6 ausgerichtet ist.

Bei dem das Bewegungsgeberelement 1 bildenden Zahnrad ist somit die erste Zone durch zwei Zahnkränze gebildet, die axial nebeneinander und in der Bewegungsrichtung 5 des Zahnrades, d.h. in seiner Umfangsrichtung, um einen halben Abstand zweier aufeinanderfolgender Zähne versetzt angeordnet sind. Dadurch ist jedem Zahn eines ersten der Zahnkränze (Teil 2) eine Lücke des zweiten der Zahnkränze (Teil 3) benachbart, und umgekehrt ist jeder Lücke des ersten Zahnkranzes (Teil 2) ein Zahn des zweiten Zahnkranzes (Teil 3) benachbart. Beispielsweise ist einer Lüche 21 im ersten Zahnkranz (Teil 2) ein Zahn 23 im zweiten Zahnkranz (Teil 3) und einem sich an die Lüche 21 im ersten Zahnkranz (Teil 2) anschließenden Zahn 22 eine sich an den Zahn 23 im zweiten Zahnkranz (Teil 3) anschließende Lücke 24 benachbart.

Das bei der ersten Zone wirksame Meßfeld vor einer jeden Paarung aus einem Zahn auf einem der beiden, durch die Zahnteilungen der Teile 2 und 3 gebildeten Zahnkränze mit einer Lücke aus dem jeweils anderen dieser Zahnkränze wird gebildet durch die Verformungen der magnetischen Feldlinien des Magnetfeldes des ersten Arbeitsmagneten 10 in der axialen Richtung des Zahnrades 1, d.h. wechselweise zu den Zähnen 23, 22, usw., der beiden Zahnkränze des Zahnrades 1 hin. Dabei ist das Meßfeld wechselweise gleich- oder gegensinnig zur Meßrichtung 8 des ersten Sensorelements 6 orientiert. Entsprechend gibt das erste Sensorelement 6 bei einer Drehung des Zahnrades 1 abwechselnd ein positives oder ein negatives Ausgangssignal ab. So werden beispielsweise in der Stellung des Zahnrades 1, in der sich die Paarung der Lücke 21 mit dem Zahn 23 vor dem ersten Sensorelement 6 befindet, die Feldlinien des Magnetfeldes des ersten Arbeitsmagneten 10 entgegen der Meßrichtung 8, nämlich vom Zahn 23 weg, ausgelenkt, was ein Meßfeld in negativer Meßrichtung 8 hervorruft und damit einem negativen Ausgangssignal entspricht. Wird das Zahnrad 1 weiter in der Bewegungsrichtung 5 gedreht, bis die Paarung aus dem Zahn 22 und der Lücke 24 dem ersten Sensorelement 6 gegenübersteht, so kommt es vor der Anordnung aus Lücke 24 und Zahn 22 zu einer Auslenkung der Feldlinien des Magnetfeldes des ersten Arbeitsmagneten 10 in entgegengesetzter Richtung, d.h. in der Meßrichtung 8, was ein Meßfeld in positiver Meßrichtung 8 hervorruft und damit einem positiven Ausgangssignal entspricht.

Bezüglich des Ausgangssignals des ersten Sensorelements 6 bedeutet der Versatz der beiden Zahnkränze in Umfangsrichtung, d.h. in der Bewegungsrichtung 5, um einen halben Abstand zweier aufeinanderfolgender Zähne eine (elektrische) Verschiebung um 180°.

Das erste Sensorelement 6 gibt ein erstes Meßsignal ab, das eine Information über die Position des Bewegungsgeberelements 1 entlang dessen Bewegungskoordinate in der Bewegungsrichtung 5 liefert. Durch diese Anordnung wird erreicht, dass auch bei Zahnrädern mit grober erster Teilung in der ersten Zone immer eine eindeutige Zuordnung des Ausgangssignals des ersten Sensorelements 6 zu einer bestimmten Position des Bewegungsgeberelements 1 entlang der Bewegungskoordinate, d.h. in der Bewegungsrichtung 5, gegeben ist.

Hinter dem zweiten Sensorelement 7 auf seiner vom Bewegungsgeberelement 1 abgewandten Seite ist in der Anordnung nach Fig. 1 außerdem ein zweiter Arbeitsmagnet 11 angeordnet, der ebenfalls als Permanentmagnet ausgebildet ist und durch den die Anordnung aus Zahnrad 1 und zweitem Sensorelement 7 mit einem zweiten Magnetfeld beaufschlagt wird, wobei die durch einen Pfeil mit dem Bezugszeichen 13 dargestellte hauptsächliche Richtung der magnetischen Feldlinien des vom zweiten Arbeitsmagneten 11 ausgehenden Magnetfeldes im wesentlichen rechtwinklig zur Bewegungskoordinate des Zahnrades 1, d.h. zu dessen Bewegungsrichtung 5, ausgerichtet ist.

Die Zähne des Teils 4 des Zahnrades 1 bilden in der Anordnung nach Fig. 1 die zweite streifenförmige Zone periodisch wiederkehrender Bereiche wechselnder Beeinflussung eines zweiten Meßfeldes welches durch eine Feldkomponente des vom zweiten Arbeitsmagneten 11 ausgehenden Magnetfeldes parallel zur Bewegungsrichtung 5 gebildet wird und in der Fig. 1 nicht explizit dargestellt ist. Dieses zweite Meßfeld entsteht durch die Auslenkung der magnetischen Feldlinien zu den Flanken der Zähne des Teils 4 des Zahnrades 1 hin. Das zweite Meßfeld ist somit zumindest im wesentlichen parallel sowohl zur Bewegungsrichtung 5 des Bewegungsgeberelements 1 als auch zur Meßrichtung 9 des zweiten Sensorelements 7 ausgerichtet. Das zweite Sensorelement 7 liefert ein zweites Meßsignal, welches zuvörderst zur Messung der Bewegungsgeschwindigkeit des Bewegungsgeberelements 1 in der Bewegungsrichtung 5 herangezogen wird.

Durch eine Verknüpfung der dem ersten und dem zweiten Meßsignal entnehmbaren Informationen kann nun ferner ohne ein weiteres Sensorelement zusätzlich eine Information über die Drehrichtung gewonnen werden. Dies beruht darauf, dass bei der erfindungsgemäßen Anordnung der Teilungen der ersten und der zweiten Zone bei einem Übergang von einer Lücke zu einem Zahn der ersten Zone je nach Drehrichtung des Bewegungsgeberelements 1 mit oder entgegen der Bewegungsrichtung 5 am ersten Sensorelement unterschiedliche Meßsignale abgegeben werden. Dies wird mit anderen Worten formuliert dadurch erreicht, dass die Länge eines Zahns bzw. einer Lüche sich ergibt aus dem Produkt der Zahnteilung d.h. dem Abstand der Zähne, in der zweiten Zone mit der Summe aus einer ganzen Zahl, nämlich 1, 2, ..., und dem Abmessungsverhältnis zwischen Zahn und Lücke der zwaten Zone.

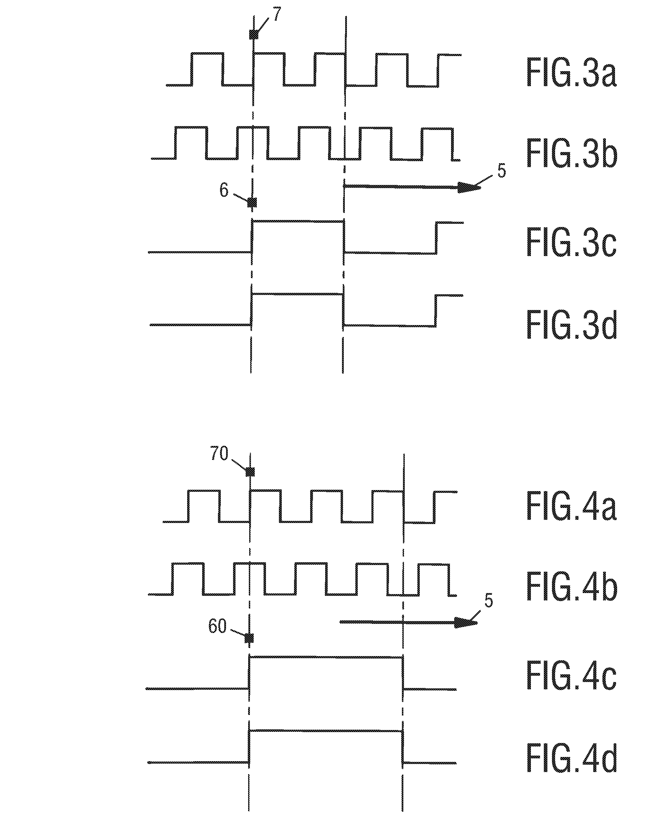

Fig. 3 zeigt in Form eines schematischen Diagramms die räumliche Zuordnung der Zahnteilung der zweiten Zone im Teildiagramm a) zur Zahnteilung der ersten Zone im Teildiagramm c) sowie dazu die elektrische Zuordnung des ersten Meßsignals des ersten Sensorelements 6 im Teildiagramm d) zum zweiten Meßsignal des zweiten Sensorelements 7 im Teildiagramm b). Die räumliche Position der Sensorelemente 6,7 gegenüber den Zahnteilungen in den Zonen sowie die Bewegungsrichtung 5 sind im Diagramm nach Fig. 3 schematisch eingetragen.

Dreht sich das Zahnrad 1 entsprechend der in Fig. 3 eingezeichneten Bewegungsrichtung, so besitzt das zweite Meßsignal des zweiten Sensorelements 7 beim Nulldurchgang des ersten Meßsignals des ersten Sensorelements 6, d.h. beim Übergang von einem Zahn zu einer Lücke in der eisten Zone, eine andere Polarität als bei einer Bewegung entgegen der durch die Pfeilrichtung markierten Bewegungsrichtung.

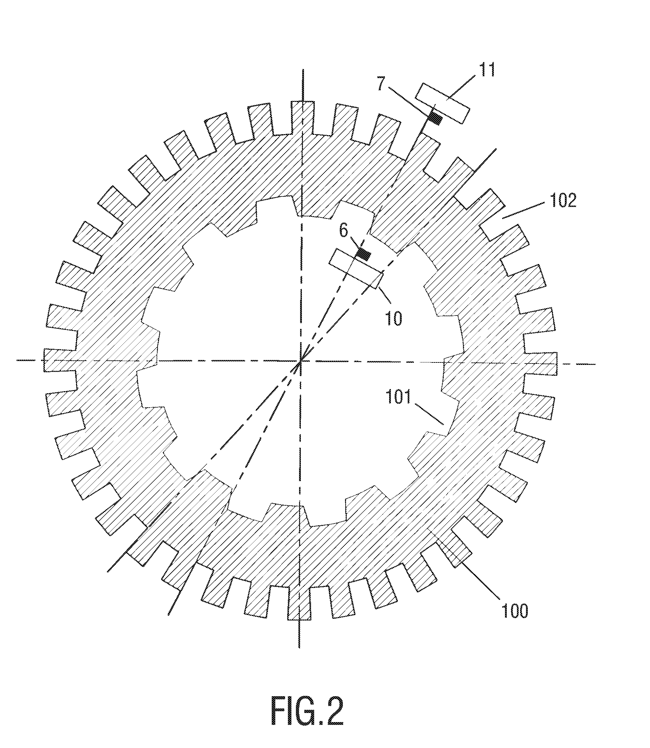

In Fig. 2 ist eine Abwandlung der Anordnung nach Fig. 1 dargestellt, in der anstelle einer axialen Ausrichtung die erste Zone periodisch wiederkehrender Bereiche wechselnder Beeinflussung eines ersten Magnetfeldes in einem Innenzahnkranz 101 und die zweite Zone periodisch wiederkehrender Bereiche wechselnder Beeinflussung eines zweiten Magnetfeldes in einem Außenzahnkranz 102 eines Zahnrades 100 untergebracht sind Die Teilungen der Zahnkränze 101, 102 und deren Orientierung zueinander sowie zu dem ersten Sensorelement 6, dem ersten Arbeitsmagneten 10, dem zweiten Sensorelement 7 und dem zweiten Arbeitsmagneten 11 entsprechen der Anordnung nach Fig. 1.

Fig. 4 zeigt in Form eines in seinem Aufbau der Fig. 3 entsprechenden weiteren schematischen Diagramms für ein weiteres Ausführungsbeispiel der Erfindung die räumliche Zuordnung der Zahnteilung der zweiten Zone im Teildiagramm a) zur Zahnteilung der ersten Zone im Teildiagramm c) sowie dazu die elektrische Zuordnung des ersten Meßsignals eines ersten Sensorelements 60 im Teildiagramm d) zum zweiten Meßsignal eines zweiten Sensorelements 70 im Teildiagramm b). Die räumliche Position der Sensoielemente 60, 70 gegenüber den Zahnteilungen in den Zonen sowie die Bewegungsrichtung 5 sind im Diagramm nach Fig. 4 schematisch eingetragen. Im Gegensatz zu Fig. 3 weist die hier gezeigte Anordnung ein Verhältnis der ersten Teilung der ersten Zone zur zweiten Teilung der zweiten Zone von 1:5 auf, also eine gegenüber der ersten Teilung feinere zweite Teilung. Ansonsten entspricht diese Anordnung derjenigen nach Fig. 3.

## Patentansprüche

1. Anordnung zum Bestimmen der Bewegungsrichtung eines Bewegungsgeberelements, welches in einer sich entlang einer Bewegungskoordinate, die eine Bewegung des Bewegungsgeberelements beschreibt, streifenförmig erstreckenden ersten Zone angeordnete, mit einer ersten Teilung periodisch wiederkehrende Bereiche wechselnder Beeinflussung eines ersten Magnetfeldes und in einer sich entlang der Bewegungskoordinate streifenförmig erstreckenden zweiten Zone angeordnete, mit einer zweiten Teilung periodisch wiederkehrende Bereiche wechselnder Beeinflussung eines zweiten Magnetfeldes aufwist, mit einem ersten Sensorelement zum Delektieren der Beeinflussung des ersten Magnetfeldes durch die erste Zone des Bewegungsgeberelements und mit einem zweiten Sensorelement zum Detektieren der Beeinflussung des zweiten Magnetfeldes durch die zweite Zone des Bewegungsgeberelements, worin die erste Teilung der ersten Zone in einem ungeraden, ganzzahligen Verhältnis zur zweiten Teilung der zweiten Zone steht.

2. Anordnung nach Anspruch 1,
**dadurch gekennzeichnet,**
**dass** die erste Zone im wesentlichen in einer sich entlang der Bewegungskoordinate des Bewegungsgeberelements erstreckenden ersten Hauptfläche des Bewegungsgeberelements und dass die zweite Zone im wesentlichen in einer sich entlang der Bewegungskoordinate des Bewegungsgeberelements erstreckenden zweiten Hauptfläche des Bewegungsgeberelements angeordnet ist.

3. Anordnung nach Anspruch 1 oder 2,
**dadurch gekennzeichnet,**
**dass** das erste Sensorelement gegenüber oder neben einem bezüglich der Bewegungsrichtung seitlichen Randbereich der ersten Zone periodisch wiederkehrender Bereiche wechselnder Beeinflussung des ersten Magnetfeldes des Bewegungsgeberelements angeordnet ist.

4. Anordnung nach Anspruch 1 oder 2,
**dadurch gekennzeichnet,**
**dass** die erste Zone zwei parallel zueinander entlang der Bewegungskoordinate des Bewegungsgeberelements sich erstreckende Teilzonen mit der gleichen, ersten Teilung periodisch wiederkehrender Bereiche wechselnder Beeinflussung des Magnetfeldes aufweist, die um wenigstens nahezu eine halbe Periode der ersten Teilung in Richtung der Bewegungskoordinate des Bewegungsgeberelements versetzt angeordnet sind

5. Anordnung nach Anspruch 2, 3 oder 4,
**dadurch gekennzeichnet,**
**dass** die Zonen bzw. Teilzonen periodisch wiederkehrender Bereiche wechselnder Beeinflussung des Magnetfeldes durch abwechselnd im wesentlichen senkrecht zur zugeordneten Hauptfläche des Bewegungsgeberelements vor- und rückspringende Ausformungen eines vom Bewegungsgeberelement umfaßten, magnetisierbaren Werkstoffs gebildet sind

6. Anordnung nach Anspruch 5,
**gekennzeichnet durch** wenigstens einen Arbeitsmagneten zum Beaufschlagen der Anordnung mit dem ersten und dem zweiten Magnetfeld, wobei die hauptsächliche Richtung der magnetischen Feldlinien des vom Arbeitsmagneten ausgehenden Magnetfeldes bzw. der von den Arbeitsmagneten ausgehenden Magnetfelder wenigstens weitgehend rechtwinklig zur Bewegungskoordinate des Bewegungsgeberelements ausgerichtet ist.

7. Anordnung nach Anspruch 2, 3 oder 4,
**dadurch gekennzeichnet,**
**dass** die Zonen bzw. Teilzonen periodisch wiederkehrender Bereiche wechselnder Beeinflussung des Magnetfeldes durch sich abwechselnde, entgegengesetzte magnetische Pole eines vom Bewegungsgeberelement umfaßten, magnetisierten Werkstoffs gebildet sind

8. Anordnung nach Anspruch 3, 4, 5, 6 oder 7,
**dadurch gekennzeichnet,**
**dass** das erste Sensorelement entlang einer Meßrichtung gegenüber wenigstens der Polarität des Magnetfeldes empfindlich und zum Abgeben eines Meßsignals in Abhängigkeit von einer in der Meßrichtung gemessenen, als erstes Meßfeld bezeichneten Feldkomponente des ersten Magnetfeldes ausgebildet ist und dass die Meßrichtung des ersten Sensorelements wenigstens nahezu rechtwinklig zur Bewegungskoordinate des Bewegungsgeberelements ausgerichtet ist.

9. Anordnung nach einem der vorhergehenden Ansprüche,
**dadurch gekennzeichnet,**
**dass** wenigstens eines der Sensorelemente als Hall-Sensorelement ausgestaltet ist

10. Anordnung nach einem der Ansprüche 1 bis 8,
**dadurch gekennzeichnet,**
**dass** wenigstens eines der Sensorelemente als magnetoresistives Sensorelement ausgestaltet ist

11. Anordnung nach einem der Ansprüche 1 bis 10,
**dadurch gekennzeichnet,**
**dass** das Bewegungsgeberelement linear ausgebildet ist.

12. Anordnung nach einem der Ansprüche 1 bis 10,
**dadurch gekennzeichnet,**
**dass** das Bewegungsgeberelement drehsymmetrisch ausgebildet ist.
